# DEMANDE DE BREVET EUROPEEN

(11) **EP 1 428 751 A1**
(43) Date de publication de la demande: **16.06.2004**
(21) Numéro de dépôt: 03292963.0
(22) Date de dépôt: 28.11.2003
(51) Int. Cl.: B64C 25/34, F16C 33/04

(54) **Procédé de mise en forme d'une paroi interne d'un palier de support d'un élément cylindrique**

(30) Priorité: 11.12.2002 FR 0215643
(71) Demandeur: MESSIER-DOWTY SA, F-78140 Velizy Villacoublay (FR)
(72) Inventeur: Serouart, Florian, 92370 Chaville (FR); De Kermadec, Christophe, 78000 Versailles (FR)
(74) Mandataire: Jaunez, Xavier

(57) **Abrégé**

L'invention concerne un procédé de mise en forme de la paroi interne (4) d'un palier de support (3) ayant une hauteur H donnée et apte à recevoir une partie cylindrique d'un élément cylindrique (2) pour coopérer avec la paroi interne (4), ledit procédé comportant les étapes d' estimer une flèche f prise par l'élément cylindrique (2) entre le centre et une extrémité du palier de support (3), d'estimer un rayon nominal R par la relation R=H²/8f, de déterminer une paroi interne de palier de support (3) s'étendant selon une surface torique (S) ayant un col égal, à un jeu (J) prédéterminé près, à un diamètre de l'élément cylindrique (2), et ayant un rayon méridien compris dans une fourchette de ±15% autour du rayon nominal R et d'usiner le palier de support (3) de sorte que sa paroi interne (4) s'étende selon la surface torique (S) ainsi déterminée.

## Description

L'invention concerne un procédé de mise en forme d'une paroi interne d'un palier de support d'un élément cylindrique tel qu'un axe d'articulation ou encore une tige coulissante, l'élément cylindrique pouvant être fixe ou mobile.

### ARRIERE-PLAN DE L'INVENTION

La plupart des paliers de support présentent une paroi interne cylindrique. Ces paliers de support conviennent parfaitement lorsque la rigidité en flexion de l'élément cylindrique et/ou le chargement que l'élément cylindrique subit induisent une déformée de l'élément cylindrique qui est négligeable par rapport aux dimensions macroscopiques du palier de support.

Lorsque l'élément cylindrique est plus souple, ou lorsqu'il est soumis à un chargement important, la déformée de l'élément cylindrique n'est plus négligeable, et l'élément cylindrique est alors en appui sur le palier de support selon une ou des zones de surface réduite, augmentant localement la pression sur l'élément cylindrique de façon considérable. Dans de telles conditions, l'élément cylindrique est en appui sur l'extrémité du palier de support, ce qui donne lieu à des marquages de l'élément cylindrique par détérioration du revêtement de surface de celui-ci. Ce phénomène conduit à une dégradation de l'état de surface de l'élément cylindrique, ce qui peut donner lieu à des départs de criques de fatigue.

Pour résoudre ce problème, on a déjà proposé des paliers de support à paroi interne cylindrique présentant des chanfreins à au moins une extrémité de la paroi interne. Ces paliers de support offrent une certaine amélioration par rapport aux paliers de support à paroi interne purement cylindrique.

On a également proposé de donner à la paroi interne du palier de support une surface non plus cylindrique, mais bombée.

Divers types de surfaces ont été considérés, des formules ayant été proposées pour déterminer les paramètres de telles surfaces en fonction de données géométriques comme la hauteur du palier de support ou le diamètre de l'élément cylindrique.

Ces formules ont pour inconvénient de ne pas tenir compte des caractéristiques de raideur de l'élément cylindrique, ni du chargement réellement appliqué à celui-ci.

Pour compléter l'arrière-plan technologique, on pourra se référer aux documents US-A-4 396 170, US-A-3 969 029, US-A-4 136 582 et US-A-4 688 808.

### OBJET DE L'INVENTION

L'invention a pour objet un procédé pour déterminer une surface en vue de la mise en forme de la paroi interne du palier de support selon ladite surface, en tenant compte des caractéristiques de raideur de l'élément cylindrique ainsi que du chargement qui lui est appliqué, sans toutefois recourir à des moyens de calculs complexes, comme par exemple des calculs par éléments finis volumiques.

### BREVE DESCRIPTION DE L'INVENTION

Selon l'invention, on propose un procédé de mise en forme d'une paroi interne d'un palier de support ayant une hauteur H donnée et destiné à guider un élément cylindrique, ledit procédé comportant les étapes de :
- estimer une flèche f prise par l'élément cylindrique entre le centre et une extrémité du palier de support , compte tenu :
   - d'un chargement prédéterminé de l'élément cylindrique;
   - de caractéristiques de raideur prédéterminées de l'élément cylindrique ;
   - d'une hypothèse prédéterminée d'appui entre l'élément cylindrique et le palier de support ;
- estimer un rayon nominal R par la relation R=H²/8f ;
- déterminer une surface torique ayant un col égal, à un jeu prédéterminé près, au diamètre de l'élément cylindrique, et ayant un rayon méridien compris dans une fourchette de ±15% autour du rayon nominal;
- usiner la paroi interne du palier de support selon la surface torique ainsi déterminée.

La détermination de la flèche peut être réalisée, grâce aux hypothèses retenues selon l'invention, en assimilant le comportement de l'élément cylindrique à une poutre prismatique, ce qui simplifie considérablement l'estimation de la flèche.

Par exemple, la flèche peut être déterminée par un calcul manuel à l'aide d'un formulaire de déformées de poutres. La flèche peut encore être déterminée par un simple modèle par éléments finis de type poutres. Ce modèle est très simple à concevoir et peut être mis en oeuvre grâce à des moyens limités de calcul.

La forme torique est simple et facilement programmable sur une machine-outil à commande numérique.

Le choix d'une surface simple à fabriquer, déterminée selon des règles simples, permet de donner à la paroi interne du palier de support une forme offrant une diminution significative de la pression locale entre le palier de support et l'élément cylindrique, comme des calculs par éléments volumiques complexes ont permis de le vérifier.

De préférence, le chargement prédéterminé de l'élément cylindrique correspond à un chargement sévère susceptible de survenir en moyenne moins d'une fois sur mille chargements de l'élément cylindrique.

Par sévère, on entend ici un chargement qui, parmi tous les chargements envisagés, occasionne la plus grande flèche de l'élément coulissant, et donc le plus petit rayon méridien nominal de la surface du palier de support.

Le critère retenu pour le choix du chargement donne une marge acceptable pour le fonctionnement usuel de l'élément cylindrique, et permet de limiter les conséquences sur la tenue en fatigue de l'élément cylindrique de l'application sur ce dernier d'un chargement plus sévère que le chargement retenu, en raison de la rareté dudit chargement plus sévère.

Selon un mode particulier de mise en oeuvre du procédé de l'invention adapté à un palier de support destiné à être monté avec serrage dans un siège, celui-ci comporte l'étape de monter avec serrage le palier de support dans son siège avant d'usiner la paroi interne du palier de support selon la surface torique déterminée.

De préférence, lorsque le palier de support est monté dans son siège, sa paroi interne est cylindrique. La reprise du palier de support après son montage sur son support permet de faire en sorte que la paroi interne du palier de support s'étende bien selon la surface torique déterminée malgré les déformations du palier de support engendrées par le montage avec serrage.

### BREVE DESCRIPTION DES DESSINS

L'invention sera mieux comprise à la lumière de la description qui suit en référence aux figures des dessins annexés parmi lesquelles :
- la figure 1 est une vue partielle en coupe de l'extrémité d'une jambe d'atterrisseur d'aéronef comportant un palier de support obtenu selon l'invention;
- la figure 2 est une vue schématique de la jambe illustrée à la figure 1, soumise à un chargement déterminé ;
- la figure 3 est une vue partielle agrandie de la figure 1 illustrant la surface bombée du palier de support obtenu selon l'invention.
- la figure 4 est une vue schématique en coupe du palier de support obtenu selon l'invention montrant l'intégralité de la surface torique selon laquelle s'étend la paroi interne du palier de support.

### DESCRIPTION DETAILLEE DE L'INVENTION

Le mode de réalisation particulier de l'invention décrit en détail ici est relatif au palier inférieur équipant la partie basse d'une jambe d'atterrisseur d'aéronef.

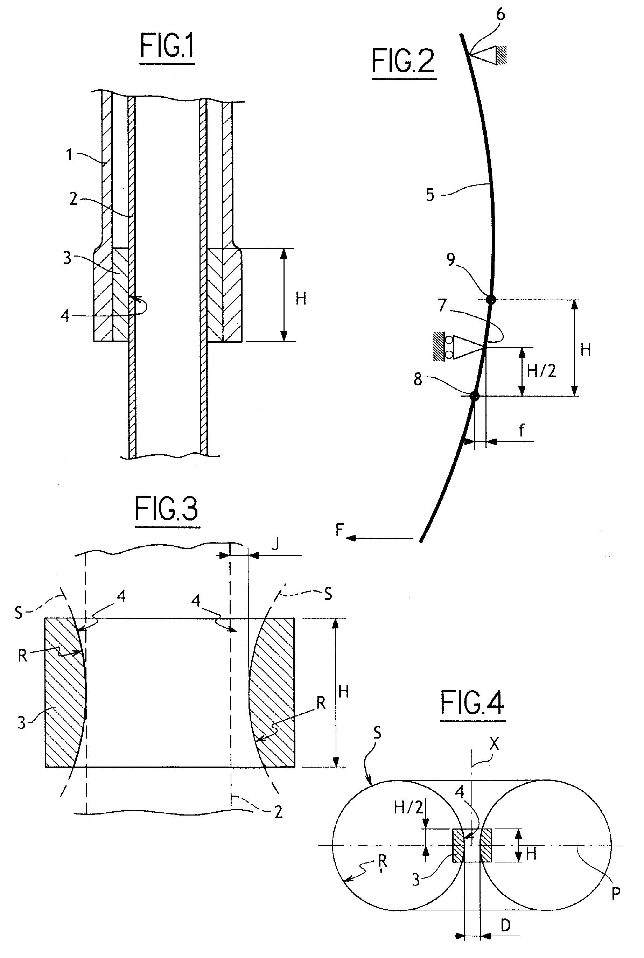

En référence à la figure 1, une jambe d'atterrisseur comporte en général un caisson 1 articulé en sa partie haute à l'avion, et dans lequel coulisse une tige 2 qui porte en son extrémité la ou les roues (non représentées) de l'atterrisseur. La tige 2 coulisse sous l'effet d'efforts de réaction du sol sur les roues et sous l'effet d'un effort contraire qu'impose sur la tige 2 un amortisseur (non représenté) intégré au caisson 1.

La tige 2 coulisse dans le caisson 1 en étant guidé par deux paliers de support, dont un palier de support supérieur (non représenté) en partie haute du caisson 1, et un palier de support inférieur 3 rapporté en partie basse du caisson 1.

Le palier de support inférieur 3 est rapporté dans un siège du caisson 1 et comporte une paroi interne 4 s'étendant en regard de la tige 2 et coopérant avec la tige 2 pour guider celle-ci lors de son coulissement. Dans tout ce document, on appellera H la hauteur du palier de support inférieur 3.

La hauteur H est déterminée de façon connue en soi en tenant compte du diamètre de la tige 2, par exemple en considérant un critère basé sur le taux moyen de matage admissible entre le palier de support 3 et la tige 2. On pourra également tenir compte, pour la détermination de la hauteur H, de la résistance à l'arrachement du palier de support inférieur 3 de son siège, et de la tenue mécanique du siège lors de l'application d'un chargement sur la tige 2.

La tige 2 subit de nombreux efforts transversaux, en particulier lors de l'atterrissage ou du remorquage de l'avion. En effet, les roues ne tournent pas lors du contact initial desdites roues avec le sol. La mise en rotation des roues génère des efforts longitudinaux vers l'arrière (du fait de la résistance à la rotation) et vers l'avant (effet de retour élastique) qui font fléchir la tige 2, et donc appuyer celle-ci très fortement contre la paroi interne du palier de support inférieur 3 (en particulier sur le bord inférieur de celui-ci), en même temps que la tige 2 s'enfonce dans le caisson 1 sous l'effet de la réaction du sol.

Sous de tels chargements, des phénomènes d'arcboutement entre le palier de support inférieur 3 et la tige 2 peuvent apparaître et contribuer, par une augmentation excessive de la pression de matage entre la tige 2 et l'extrémité du palier de support inférieur 3, à endommager le revêtement de la tige 2. Ces endommagements créent sur la tige 2 un réseau de défauts disposés le long de la tige 2 comme les barreaux d'une échelle. Ces défauts sont susceptibles de donner naissance à des criques de fatigue.

Pour atténuer ce risque, et comme cela est visible à la figure 4, la paroi interne 4 du palier de support inférieur 3 s'étend selon l'invention selon une surface torique S qui est centrée sur l'axe X de révolution du palier de support inférieur 3, la surface torique S ayant un plan équatorial P sensiblement confondu avec un plan médian du palier de support inférieur 3.

La surface torique S, et donc le palier de support inférieur 3, a un col ayant un diamètre D égal au diamètre de la tige 2 à un jeu J prédéterminé près. Le jeu J, visible à la figure 3, est déterminé de façon connue en soi en fonction du diamètre de la tige 2.

La surface torique S a par ailleurs un rayon méridien R qui est déterminé selon l'invention comme suit.

En référence à la figure 2, on estime tout d'abord une flèche f de la tige lorsqu'elle subit un chargement prédéterminé, symbolisé ici par un effort transverse F.

A cet effet, on formule les hypothèses de calcul suivantes :
- la tige est considérée comme se comportant comme une poutre 5 prismatique dont les caractéristiques de raideur sont connues et sont données par la forme de la tige et les caractéristiques élastiques du matériau de la tige ;
- la poutre 5 est considérée comme étant en appui sur un appui ponctuel supérieur 6 correspondant au palier de support supérieur, et un appui ponctuel inférieur 7 correspondant au palier de support inférieur 3, les appuis ponctuels 6,7 étant situés sensiblement au centre des paliers de support supérieur et inférieur de la tige et étant considérés comme infiniment rigides.

Sous ces hypothèses, il est aisé pour l'homme du métier, soit en utilisant un formulaire, soit en réalisant un modèle poutre simple sur un logiciel d'éléments finis, de calculer la déformée de la poutre 5 modélisant la tige 2.

On estime alors la flèche f prise par la poutre 5 entre le centre du palier de support inférieur 3 correspondant à l'appui ponctuel 7 et les points 8 et 9 correspondant chacun à une extrémité du palier de support 3, et donc situés à une distance H/2 de l'appui ponctuel 7. On retiendra la plus grande des deux valeurs ainsi estimées.

Une fois la flèche f ainsi déterminée, on détermine un rayon méridien nominal de la surface torique S par la relation R=H²/8f.

Puis on usine le palier de support inférieur 3 de sorte que sa paroi interne 4 s'étende selon la surface torique S.

A titre d'exemple, pour un palier de support inférieur 3 de 75 mm de hauteur et pour une flèche f estimée de 1 mm, le rayon méridien vaut sensiblement 700 mm. La paroi interne 4 du palier de support inférieur 3 s'étend donc selon une surface torique qui est certes non cylindrique, mais néanmoins de courbure positive très faible. La courbure positive de la paroi interne 4 a donc été très largement exagérée sur la figure 3.

Des calculs complexes par éléments finis volumiques ont permis de vérifier qu'un palier de support ainsi réalisé permet d'abaisser significativement les pressions de matage entre le palier de support et la tige lorsque celle-ci est soumise aux efforts usuels.

Ces calculs montrent que la zone de contact entre le palier de support inférieur 3 et la tige 2 est plus élargie que dans le cas d'un palier de support cylindrique et s'éloigne du bord du palier de support inférieur 3, ce qui permet d'atténuer notablement le phénomène de marquage du revêtement de la tige 2 sous l'effet des chargements.

Ces calculs ont par ailleurs permis de montrer que l'atténuation ainsi obtenue reste notable pour des paliers de support dont la paroi interne s'étend selon une surface torique ayant un rayon méridien compris dans une fourchette de plus ou moins 15% autour du rayon nominal déterminé précédemment.

Pour le calcul de la flèche, on considérera de préférence un chargement qui est représentatif d'un cas de chargement sévère, par exemple un cas de chargement susceptible de se présenter en moyenne moins d'une fois sur mille.

Ce choix donne un rayon nominal plus faible que celui que l'on pourrait obtenir avec un chargement représentatif d'un chargement usuel, ce qui contribue à baisser la pression de matage entre le palier de support inférieur 3 et la tige 2 lorsque celle-ci subit un chargement usuel, sans toutefois que la forme de la paroi interne du palier de support dégénère en une surface torique de courbure importante, qui aurait pour résultat de concentrer l'appui dans une région circulaire autour du centre du palier de support, ce qui n'est pas souhaitable.

Par ailleurs, ce choix permet de minimiser l'impact d'un chargement dépassant le chargement sévère ainsi retenu, en raison de la rareté relative du chargement retenu.

Dans le cas d'un atterrisseur, le chargement retenu pourra être, selon le cas, un cas de mise en rotation des roues lors d'un atterrissage à la masse maximale d'atterrissage, un cas de freinage de l'avion à la masse maximale, ou encore un cas de remorquage.

Une fois la surface torique S ainsi déterminée, la paroi interne 4 du palier de support inférieur 3 est usinée pour s'étendre selon la dite surface torique S.

Selon un autre aspect de l'invention relatif au montage des paliers de support avec serrage dans leur support, il est avantageux de procéder au montage avec serrage du palier de support inférieur 3 dans l'extrémité du caisson 1, puis d'usiner la paroi interne 4 du palier de support inférieur 3 de sorte qu'elle s'étende selon la surface torique S ainsi déterminée.

On sait en effet que le montage du palier de support inférieur 3 avec serrage induit une compression radiale du palier de support inférieur 3, de sorte que la paroi interne 4 du palier de support inférieur 3 ne s'étend plus selon la surface désirée. Pour éviter cet inconvénient, il est avantageux d'usiner la paroi interne 4 du palier de support inférieur 3 selon la surface torique S après son montage dans le caisson 1.

La matière à enlever lors de cette mise en forme est en général très faible, étant donné que la surface torique S est localement très proche d'un cylindre en raison de la faiblesse de la courbure positive de la surface torique S.

Il est dès lors intéressant selon l'invention de prévoir de monter le palier de support inférieur 3 sur le caisson 1 alors que la paroi interne 4 du palier de support inférieur 3 est cylindrique. Cette disposition facilite la production du palier de support inférieur 3.

La mise en forme de la paroi interne 4 ne peut plus se faire à l'aide d'un alésoir comme dans le cas d'un palier de support classique, mais pourra se faire à l'aide d'une machine-outil adaptée à générer une paroi interne de forme torique, par exemple une tour à commande numérique programmé de façon adéquate, ou encore de machines-outils ayant une broche équipée d'une tête spécifique.

L'invention n'est pas limitée aux modalités particulières de mise en oeuvre de l'invention qui viennent d'être décrites, mais bien au contraire englobe toute variante entrant dans le cadre de l'invention tel que défini par les revendications.

Il est bien sûr entendu que l'invention pourra s'appliquer dans tout mécanisme dans lequel un élément cylindrique coopérant avec un palier de support est soumis à des efforts transversaux susceptibles de générer une flèche de l'élément cylindrique.

Les hypothèse particulières qui ont été détaillées dans le mode particulier de mise en oeuvre de l'invention décrit ici pourront faire l'objet de nombreuses variantes, comme par exemple remplacer l'hypothèse d'appui ponctuel par une hypothèse de répartition sur la hauteur H du palier de support inférieur 3 de l'effort entre le palier de support inférieur 3 et la tige 2, ou encore simplifier la modélisation de la poutre 5 en considérant un diamètre de tige 2 constant pris égal à la moyenne des diamètres de la tige 2, ou bien encore considérer que le palier est mobile transversalement à l'encontre de la raideur en flexion du caisson, sous l'effet d'un chargement transversal. Dans ce dernier cas, on prendra soin de distinguer entre la partie de déplacement transversal subi par l'élément coulissant, et la partie de déformation proprement dite, occasionnant la flèche recherchée.

Bien que dans l'exemple illustré, le palier de support soit constitué par une pièce en forme de bague rapportée sur un siège en extrémité du caisson, la surface interne pourra être directement usinée dans le siège, en se passant ainsi de pièce rapportée.

Bien que l'on ait indiqué que le palier de support était symétrique par rapport à un plan médian, on pourra plus généralement prévoir des paliers de support pour lequels le plan équatorial de la surface torique est décalé par rapport au plan médian. On s'est en effet aperçu que dans le cas d'un palier de support symétrique, l'élément cylindrique peut ne pas porter sur toute la longueur du palier, de sorte qu'il est possible, sans nuire au fonctionnement de l'ensemble, de supprimer la partie du palier de support qui ne coopère pas avec l'élément cylindrique, ce qui rend le palier de support asymétrique. On veillera toutefois à ce que la partie restante du palier de support soit apte à répondre aux autres contraintes de fonctionnement, notamment que cette partie résiste à l'arrachement (variante non représentée sur les figures).

## Revendications

1. Procédé de mise en forme d'une paroi interne (4) d'un palier de support (3) ayant une hauteur H donnée et destiné à recevoir un élément cylindrique (2), ledit procédé comportant les étapes de :
- estimer une flèche f prise par l'élément cylindrique (2) entre le centre et une extrémité du palier de support (3), compte tenu :
• d'un chargement (F) prédéterminé de l'élément cylindrique (2) ;
• de caractéristiques de raideur prédéterminées de l'élément cylindrique (2);
• d'une hypothèse prédéterminée d'appui entre l'élément cylindrique (2) et le palier de support (3) ;
- estimer un rayon nominal R par la relation R=H²/8f ;
- déterminer une paroi interne de palier de support (3) s'étendant selon une surface torique (S) ayant un col égal, à un jeu (J) prédéterminé près, à un diamètre de l'élément cylindrique (2), et ayant un rayon méridien compris dans une fourchette de ±15% autour du rayon nominal R ;
- usiner le palier de support (3) de sorte que sa paroi interne (4) s'étende selon la surface torique (S) ainsi déterminée.

2. Procédé selon la revendication 1, **caractérisé en ce que** le chargement prédéterminé de l'élément cylindrique (2) correspond à un chargement sévère susceptible de survenir en moyenne moins d'une fois sur mille chargements de l'élément cylindrique.

3. Procédé de mise en forme d'un palier de support selon la revendication 1, adapté à un palier de support devant être monté avec serrage dans un support, **caractérisé en ce qu'**il comporte l'étape de procéder au montage avec serrage du palier de support (3) dans son support (1) avant d'usiner la paroi interne (4) du palier de support (3) selon la surface torique (S) déterminée.

4. Procédé selon la revendication 3, **caractérisé en ce que**, lorsque le palier de support (3) est monté sur son support (1), sa paroi interne (4) est cylindrique.
